# EUROPÄISCHE PATENTSCHRIFT

(11) **EP 3 186 160 B1**
(45) Veröffentlichungstag und Bekanntmachung des Hinweises auf die Patenterteilung: **26.02.2020**
(21) Anmeldenummer: 14812717.8
(22) Anmeldetag: 27.11.2014
(51) Int. Cl.: B65D 63/06, F16L 33/02

(54) **SPANNSCHELLE**
BAND CLAMP
BRIDE DE SERRAGE

(30) Priorität: 26.08.2014 WO PCT/EP2014/068046
(43) Veröffentlichungstag der Anmeldung: 05.07.2017
(73) Patentinhaber: Oetiker Schweiz AG, 8810 Horgen (CH)
(72) Erfinder: DE VITTORI, Nelson, CH-8805 Richterswil (CH); SEELOS, Robert, CH-8803 Rüschlikon (CH); MÜLLER, Manuel, CH-5626 Staffeln (CH)
(74) Vertreter: Strehl Schübel-Hopf & Partner
(86) Internationale Anmeldenummer: PCT/EP2014/075832
(87) Internationale Veröffentlichungsnummer: WO 2016/029975

(56) Entgegenhaltungen:
- US-A- 997 186
- US-A- 1 517 515
- US-A- 3 754 303
- US-B2- 7 373 695

## Beschreibung

### Stand der Technik

Zum Befestigen eines Gegenstands, etwa eines Airbagmaterials an einem Gasgenerator oder eines Airbags an einem Halterungsblech, werden Spannschellen verwendet, die aus einem Band und einer an dessen einem Endabschnitt angeordneten Schließe bestehen. Bei der Montage wird der andere Endabschnitt um das Abbindegut gewickelt und durch die Schließe gesteckt. Zum Spannen wird auf das andere Bandende Zug ausgeübt, und Band und Schließe werden im gespannten Zustand miteinander verriegelt, woraufhin die überschüssige Länge des äußeren Bandendes abgeschnitten wird..

Bei einer derartigen, aus US 8,424,166 B2 bekannten Spannschelle hat die die beiden Band-Endabschnitte umgreifende Schließe an ihrer vom Abbindegut abgewandten Außenseite ein Loch zum Einführen eines Dorns, mit dem die Band-Endabschnitte in der Schließe verformt und dadurch mit dieser verriegelt werden.

Ähnliche Spannschellen sind aus US 3,754,303, US 7,373,695 B2 und US 7,650,680 B2 bekannt, bei denen die Schließe von Anfang an am einen Band-Endabschnitt fixiert ist.

Bei allen diesen Spannschellen besteht die Schwierigkeit, dass beim Verriegeln der Bandenden in der Schließe die auf den Dorn aufgebrachte Kraft auf das Abbindegut einwirkt und dieses beschädigen kann. Ein Abbindegut oder sonstiger Gegenstand ist als Gegenelement notwendig.

Aus US 5,483,998 und US 1,517,515 ist eine weitere Spannschelle bekannt, bei der die Schließe an dem Band dadurch verriegelt wird, dass seitliche Teile des äußeren Bandendes außerhalb der Schließe nach außen gebogen werden. Dabei entstehen außerhalb der Schließe nach außen weisende Kanten.

### Abriss der Erfindung

Der Erfindung liegt die generelle Aufgabe zugrunde, die genannten Schwierigkeiten mindestens teilweise zu beseitigen. Eine speziellere Aufgabe der Erfindung kann darin gesehen werden, eine Spannschelle der eingangs beschriebenen Art zu schaffen, die sich ohne nennenswerte Einwirkung auf das Abbindegut mit der für eine sichere Fixierung benötigten Kraft montieren lässt.

Die Lösung dieser Aufgabe gelingt mit der in Anspruch 1 angegebenen Erfindung. Bei der danach ausgebildeten Spannschelle weist die Schließe ein seitliches Fenster, vorzugsweise zwei einander gegenüber liegende Fenster, auf, so dass die Verriegelung zwischen Band und Schließe durch Verformung der Bandseitenkanten erfolgen kann. Dabei wird das Abbindegut selbst dann nicht im Bereich der Schließe beeinflusst bzw. benötigt, wenn im Interesse einer sicheren Verriegelung verhältnismäßig hohe Verformungskräfte auf die Spannschelle ausgeübt werden. Da die Verriegelung im Bereich des Fensters erfolgt, kann das Band unmittelbar hinter der Schließe enden.

Weitere Vorteile der erfindungsgemäßen Bandschelle bestehen darin, dass für das Abtrennen der überschüsigen Bandlänge die Schließe selbst als Schneidkante Benutzt werden kann. Dadurch liegt der Schnitt an der Schließe, so dass Toleranzen der Schließe und ihres Fensters aufgenommen werden und die überschüssige Bandlänge bündig zur Schließe abgeschnitten wird. Dadurch werden nach außen weisende scharfe Kanten vermieden.

Ferner ist die Verriegelung durch die Schließe gegen äußere Einflüsse geschützt und bleibt sichtbar. Da die Breite des verformten Teils der Band-Seitenkante der Fensterbreite entspricht, ergibt sich eine praktisch spielfreie Verriegelung.

Vorzugsweise wird die Verriegelung mit einem die Seitenkanten des äußeren Band-Endabschnitts verformenden zangenartigen Werkzeug erzeugt.

Um eine Behinderung des Werkzeugs zu vermeiden, können die Seitenkanten des inneren Band-Endabschnitts im Bereich von in der Schließe vorhandenen Fenstern an ihren dem äußeren Band-Endabschnitt zugewandten Seiten abgeschrägt oder ausgeschnitten sein.

Vorzugsweise besteht die Schließe aus einem gebogenen Materialstreifen, dessen aufeinander zu verlaufende Enden durch ineinander greifende Vorsprünge und Ausschnitte miteinander verbunden sein können.

Eine besonders feste Fixierung der Schließe lässt sich dadurch erreichen, dass der innere Band-Endabschnitt mindestens eine quer verlaufende Kante zur Anlage an der Schließe aufweist. Die Kante kann an einer Vertiefung ausgebildet sein. Alternativ kann die Kante von einem zurückgefalteten Teil des inneren Band-Endabschnitts oder einer am inneren Band-Endabschnitt ausgeformten Prägung gebildet sein.

In weiterer Ausgestaltung der Erfindung kann der innere Band-Endabschnitt verjüngend ausgebildet oder angeschrägt sein, um zwischen dem inneren Band-Endabschnitt und dem Abbindegut Stufen zu vermeiden und Reibung zu minimieren.

Zur verbesserten Abdichtung gegenüber dem Abbindegut kann die Schließe einen auf ihrer dem Abbindegut zugewandten Seite einen Fortsatz haben.

Zur besseren Fixierung der Schließe kann diese innere Vorsprünge zur Anlage an den Seitenkanten des Bandes aufweisen.

In einer weiteren Ausgestaltung kann die Schließe einen Ansatz zum Abdecken der beim Abschneiden überschüssiger Länge am äußeren Band-Endabschnitt entstehenden Schnittkante aufweisen.

### Kurzbeschreibung der Zeichnungen

Ausführungsbeispiele der Erfindung werden nachstehend anhand der Zeichnungen näher erläutert. Darin zeigen:
Fig. 1 eine Seitenansicht einer Spannschelle im geschlossenen, noch nicht gespannten Zustand ohne Abbindegut,
Fig. 2a bis 2d perspektivische Darstellungen von vier Varianten des bei geschlossener Spannschelle inneren Band-Endabschnitts,
Fig. 3 eine perspektivische Ansicht der bei der Spannschelle nach Fig. 1 verwendeten Schließe,
Fig. 4 die Schließe nach Fig. 3 mit verriegeltem äußeren Band-Endabschnitt,
Fig. 5a bis 5c drei verschiedene Arten der Verriegelung des äußeren Band-Endabschnitts in der Schließe,
Fig. 6 eine Spannschelle mit der Schließe nach Fig. 3 im fertig montierten Zustand ohne Abbindegut,
Fig. 7 bis 11 alternative Gestaltungen der Schließe,
Fig. 12 und 13 alternative Gestaltungen des inneren Band-Endabschnitts,
Fig. 14 eine Bandschelle mit Indikator und
Fig. 15 eine Spannschelle, bei der das Band mehrfach durch die Schließe geführt ist.

### Ausführungsbeispiele

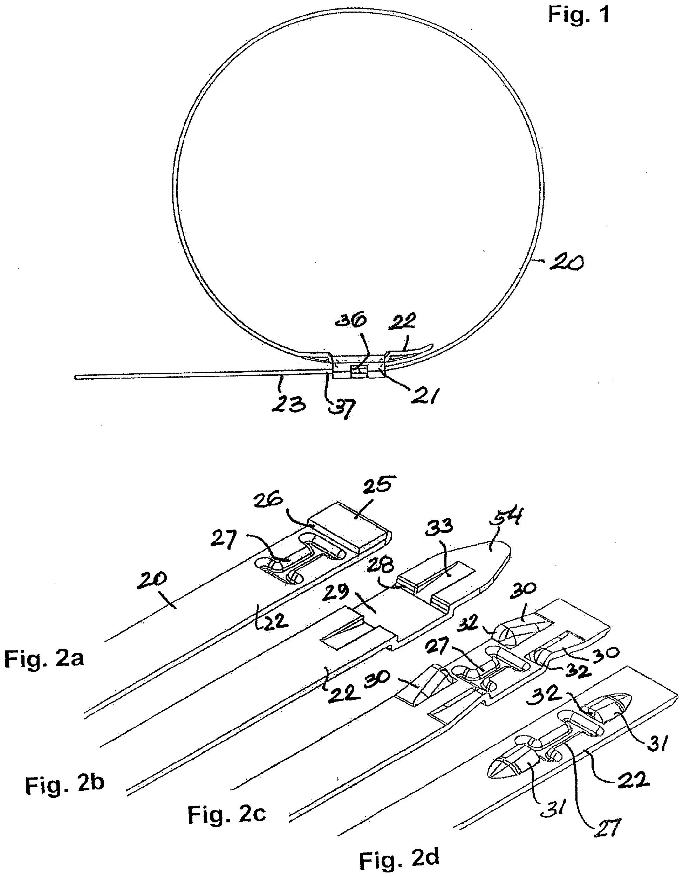

Die in Fig. 1 der Zeichnungen dargestellte Spannschelle umfasst ein Band **20** und eine Schließe **21.** Beide Teile bestehen vorzugsweise aus Metall. Die Figur zeigt einen Zustand, in dem die Spannschelle am inneren Band-Endabschnitt **22** fixiert, das Band **20** um ein (nicht dargestelltes) Abbindegut herum gelegt und der äußere Band-Endabschnitt **23** durch die Schließe **21** hindurch gesteckt ist. Bei der Fertigmontage wird das Band **20** durch Zug am äußeren Endabschnitt **23** um das Abbindegut gespannt, der äußere Endabschnitt **23** wird durch Verformung in der Schließe **21** im gespannten Zustand verriegelt, und die überschüssige Bandlänge wird knapp hinter der Schließe **21** abgeschnitten.

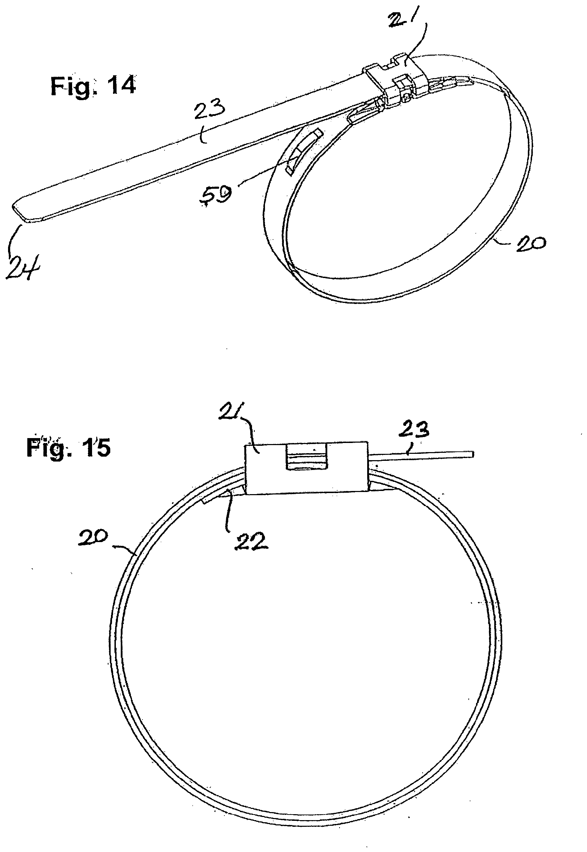

Zur Verbesserung der Handhabung beim Einfädeln des Bandes **20** in die Schließe **21** und zur Verringerung der Verletzungsgefahr kann das Ende **24** des äußeren Band-Endabschnitts **23** verrundet oder abgefast sein (siehe Fig. 14)..

In Fig. 2a bis 2d sind zur Fixierung in der Schließe **21** geeignete Gestaltungen des inneren Band-Endabschnitts **22** gezeigt. Gemäß Fig. 2a ist ein Endteil **25** des inneren Band-Endabschnitts **22** nach innen, bezogen auf den Montagezustand, umgefalzt und bildet eine vom Ende her gesehen radial nach innen weisende Kante **26** zur Anlage an der entsprechenden Stirnfläche der Schließe. Die Kante **26** dient dazu, die Schließe **21** beim Aufbringen der Spannkraft auf den äußeren Band-Endabschnitt **23** an dem Band zu fixieren.

In einem Bereich, der im Montagezustand innerhalb der Schließe **21** zu liegen kommt, ist in den inneren Band-Endabschnitt **22** eine beispielsweise H-förmige Sicke **27** geprägt, die einen Abstand zum äußeren Band-Endabschnitt **23** herstellt.

In der Gestaltung nach Fig. 2b ist eine Kante **28** an einer in dem inneren Band-Endabschnitt **22** ausgeprägten wannenartigen Vertiefung **29** ausgebildet, deren Abmessung in Bandlängsrichtung der Breite der Schließe **21** entspricht, so dass sie diese teilweise aufnimmt.

Bei den alternativen Ausführungen nach Fig. 2c und 2d sind an dem inneren Band-Endabschnitt **22** nach innen weisende Vorsprünge **30, 31** ausgeprägt, die einen der Breite der Schließe **21** entsprechenden Abstand voneinander haben. Die Vorsprünge **30, 31** definieren wiederum eine vom Bandende her radial nach innen weisende Kante **32.** Die Ausführung nach Fig. 2c ist in der perspektivischen Darstellung der Fig. 1 angenommen.

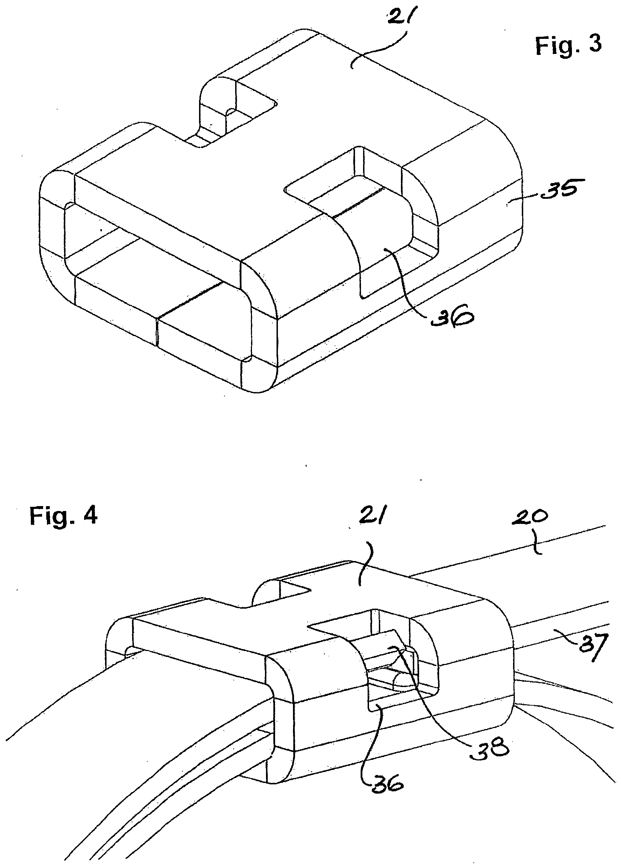

Wie in Fig. 3 und 4 gezeigt, ist die Schließe **21** aus einem Materialstreifen gefertigt, der zu einer die beiden Band-Endabschnitte **22, 23** umgreifenden Schlaufe gebogen ist. In den Seitenflächen **35** der Schließe **21** sind an einander gegenüber liegenden Stellen Fenster **36** ausgebildet, durch die hindurch ein (nicht dargestelltes) zangenartiges Werkzeug auf die Seitenkanten **37** des äußeren Band-Endabschnitts **23** einwirken kann, um sie nach dem Spannvorgang zur Verriegelung zwischen Schließe **21** und Band **20** zu verformen.

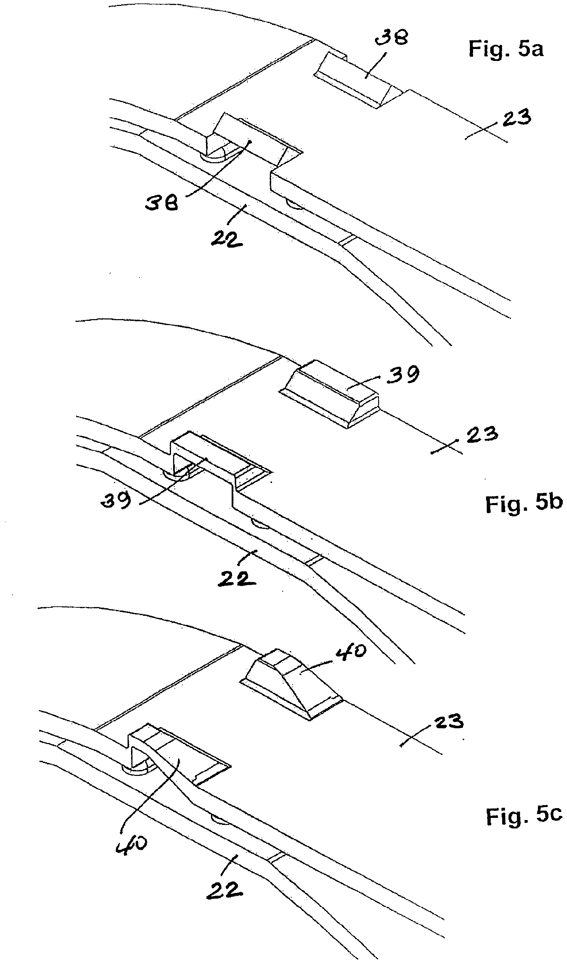

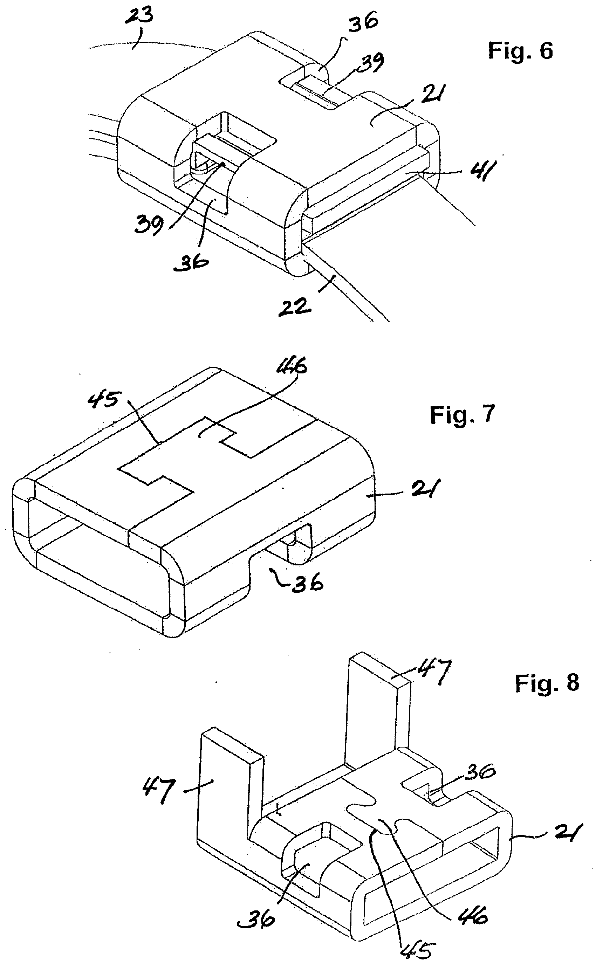

Gemäß Fig. 4 und Fig. 5a besteht die Verformung darin, dass die im Bereich der Fenster **36** liegenden Teile **38** der Seitenkanten **37** des äußeren Band-Endabschnitts **23** eingeschnitten und nach außen gekröpft werden. Alternativ kann die Verformung in Ausprägungen **39, 40** gemäß Fig. 5b und 5c bestehen. In Fig. 4 ist die Verformungsart gemäß Fig. 5a angenommen. Nach der so erzielten Verriegelung wird die überschießende Länge des Bandes **20** gemäß Fig. 6 an einer Stelle **41** knapp hinter der Schließe **21** abgeschnitten.

Wie in Fig. 7 und 8 dargestellt, ist die Schließe **21** aus einem zu einer Schlaufe gebogenen Materialstreifen geformt, dessen aufeinander zu weisende Enden durch ineinander greifende Ausschnitte **45** und Vorsprünge **46** puzzleartig miteinander verbunden sind. In einer (nicht dargestellten) Alternative kann die Schließe aus Rohrmaterial hergestellt sein

Bei dem in Fig. 8 gezeigten Ausführungsbeispiel sind Teile **47** des zu der Schlaufe gebogenen Materialstreifens ausgeklinkt, die nach dem Spannen des Bandes **20** und Verriegeln in der Schließe **21** aufeinander zu geklappt werden, um die Schnittkante **41** am äußeren Band-Endabschnitt **23** zu verdecken.

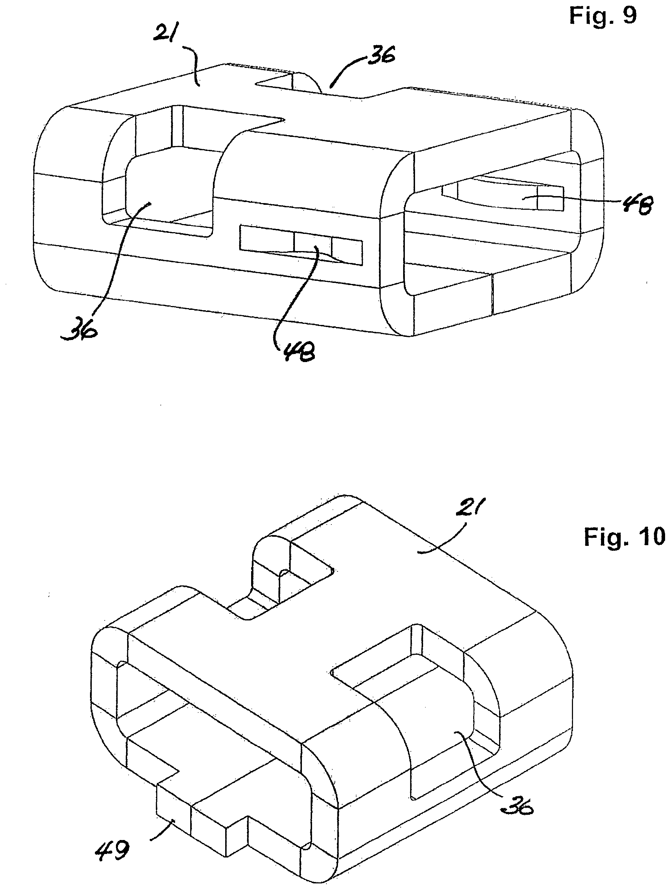

Gemäß Fig. 9 sind an den seitlichen Innenflächen der Schließe **21** Einsprünge **48** ausgebildet, die während der Montage den inneren Band-Endabschnitt **22** in seiner Höhe in der Schließe **21** positionieren. Außerdem erzeugen sie einen Abstand zu dem anschließend eingeführten äußeren Band-Endabschnitt **23** und erleichtern dadurch dessen Verformung beim Verriegeln.

Bei dem Ausführungsbeispiel nach Fig. 10 ist die Schließe **21** auf ihrem dem Abbindegut zugewandten Teil mit stirnseitigen Fortsätzen **49** versehen, die von Vorteil sind, wenn der innere Band-Endabschnitt **22** zur Fixierung der Schließe **20** Vorsprünge **30** gemäß Fig. 2c aufweist. Im fertig montierten Zustand greifen die Fortsätze **49** in den Zwischenraum zwischen den Vorsprüngen **30** ein und stellen eine lückenlose Anlage gegenüber dem Abbindegut her. Die gleiche Wirkung haben die Fortsätze **49** bei Gestaltung des Band-Endabschnitts **22** gemäß Fig. 2b durch Eingreifen in die dort vorhandenen Ausnehmungen **33.**

Die Schließe kann auch mit nur einem strinseitigen, in Richtung des äußeren Band-Endabschnitts **23** weisenden Fortsatz **49** ausgestattet sein. Da das andere Ende der Schließe durch die im montierten Zustand wirkende Kraft bündig angedrückt wird, ist auch an diesem Ende ein stufenloser Übergang sichergestellt.

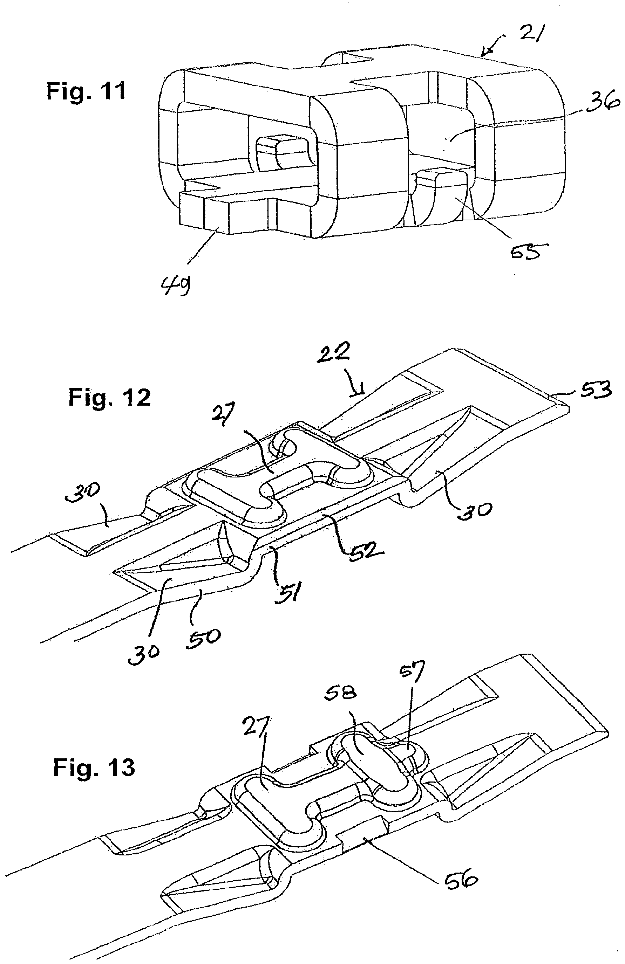

Bei der in Fig. 11 veranschaulichten weiteren Ausgestaltung weist die Schließe in jedem Fenster **36** einen Kammerfortsatz **55** auf, der den inneren Band-Endabschnitt **22** jeweils an einer seitlichen Einkerbung **56** (siehe Fig. 13) hält.

Fig. 12 zeigt den inneren Band-Endabschnitt **22** ähnlich wie Fig. 2c, jedoch von seiner anderen, im Montagezustand äußeren Seite. Wie dargestellt, sind die Seitenkanten **50** des inneren Band-Endabschnitts **22** in den innerhalb des Fensters **36** der Schließe **21** zu liegenden kommenden Teilen **51** mit in Radialrichtung nach außen weisenden Fasen **52** versehen. Diese schaffen ähnlich wie die Sicke **27** nach Fig. 2a, 2c und 2d einen Abstand vom äußeren Band-Endabschnitt **23,** um sicherzustellen, dass das Verformwerkzeug nur diesen erfasst.

Wie ferner in Fig. 12 gezeigt, ist der innere Band-Endabschnitt **22** an seinem Ende bei **53** abgeschrägt, um die Reibung zwischen den Endabschnitten **22, 23** beim Spannen zu verringern und den Kräfteübergang am inneren Band-Endabschnitt **22** gleichmäßiger zu machen. Dem gleichen Zweck dient die in Fig. 2 gezeigte Verrundung **54** des inneren Band-Endabschnitts **22.**

Wie in Fig. 13 gezeigt, kann die Sicke **27** mit einem in Richtung des inneren Band-Endabschnitts **22** weisenden Fortsatz **57** versehen sein, um die Abstützung der Schließe **21** am Band zu verbessern.

Wie ferner in Fig. 13, gezeigt, kann der in Richtung des inneren Band-Endabschnitts **22** gelegene Querbalken **58** der Sicke **27** zur Optimierung der Verriegelung erhöht sein.

Um festzustellen, ob bei der Abbindung eine gewisse Mindestkraft aufgebracht wurde, kann die Klemme mit einem visuellen Indikator **59** versehen sein. In dem in Fig. 14 gezeigten Ausführungsbeispiel besteht dieser aus einem Element, das sich bei einer bestimmten Bandspannung deformiert, z.B. zu dem Band gezogen wird und sich teilweise oder vollständig an dieses anlegt.

Zu Erzielung höherer Festigkeit kann, wie in Fig. 15 dargestellt, das Band **20** zwei- oder auch mehrfach durch die Schließe **21** geführt werden.

### Bezugszeichen

- **20**: Band
- **21**: Schließe
- **22**: innerer Band-Endabschnitt
- **23**: äußerer Band-Endabschnitt
- **24**: Ende von 23
- **25**: Endteil
- **26**: Kante
- **27**: Sicke
- **28**: Kante
- **29**: Vertiefung
- **30**: Vorsprung
- **31**: Vorsprung
- **32**: Kante
- **33**: Ausnehmung
- **35**: Seitenfläche
- **36**: Fenster
- **37**: Seitenkante
- **38**: Teil der Seitenkante 37
- **39**: Ausprägung
- **40**: Ausprägung
- **41**: Schnittkante
- **45**: Ausschnitt
- **46**: Vorsprung
- **47**: ausgeklinkter Teil
- **48**: Einsprung
- **49**: Fortsatz
- **50**: Seitenkante
- **51**: Teil der Seitenkante 50
- **52**: Fase
- **53**: Abschrägung
- **54**: Verrundung
- **55**: Kammerfortsatz
- **56**: Einkerbung
- **57**: Fortsatz
- **58**: Querbalken
- **59**: Indikator

## Patentansprüche

1. Spannschelle mit einem Band (20) und einer das Band umgreifenden und an dessen erstem Endabschnitt (22) angebrachten Schließe (21), wobei der zweite Endabschnitt (23) des das Abbindegut umgebenden und radial außerhalb des ersten Endabschnitts (22) durch die Schließe geführten Bandes (20) durch Verformung mit der Schließe (21) verriegelbar ist,
wobei eine Seitenfläche der Schließe (21) ein Fenster (36) aufweist und die Verriegelung durch Verformung einer Seitenkante (37) des Bandes (20) innerhalb des Fensters (36) herstellbar ist,
**dadurch gekennzeichnet, dass** der erste Band-Endabschnitt (22) innerhalb der Schließe (21) durch eine im ersten Band-Endabschnitt vorgesehene Sicke, oder durch an den seitlichen Innenflächen der Schließe (21) ausgebildete Einsprünge (48) oder durch in den Seitenkanten des inneren Bandes vorgesehene Fasen (52) in Abstand von dem zweiten Band-Endabschnitt (23) gehalten ist, um sicherzustellen, dass ein zangenartiges Verformungswerkzeug nur den zweiten Band-Endabschnitt (23) erfasst

2. Spannschelle nach Anspruch 1, wobei das Fenster (36) so gestaltet ist, dass es eine Schneidkante für die Verformung des Bandes (20) bildet.

3. Spannschelle nach Anspruch 1 oder 2, wobei zwei einander gegenüber liegende Seitenflächen der Schließe (21) Fenster (36) aufweisen und die Verriegelung durch gleichzeitige Verformung beider Seitenkanten (37) des Bandes (20) herstellbar ist.

4. Spannschelle nach Anspruch 1, wobei die Seitenkanten (50) des ersten Band-Endabschnitts (22) im Bereich der in der Schließe (21) vorhandenen Fenster (36) an ihrer dem zweiten Endabschnitt (23) zugewandten Seite abgefast (52) oder ausgeschnitten sind.

5. Spannschelle nach Anspruch 1, wobei der erste Band-Endabschnitt (22) mit einer den zweiten Band-Endabschnitt auf Abstand haltenden Sicke (27) versehen ist.

6. Spannschelle nach einem der vorhergehenden Ansprüche, wobei die Schließe (21) aus einem gebogenen Materialstreifen besteht, dessen aufeinander zu verlaufenden Enden vorzugsweise durch ineinander greifende Ausschnitte (45) und Vorsprünge (46) miteinander verbunden sind.

7. Spannschelle nach einem der vorhergehenden Ansprüche, wobei die Schließe (21) in jedem Fenster (36) einen Kammerfortsatz (55) aufweist, der den ersten Band-Endabschnitt (22) jeweils an einer seitlichen Einkerbung (56) hält.

8. Spannschelle nach einem der vorhergehenden Ansprüche, wobei der erste Band-Endabschnitt mindestens eine quer verlaufende Kante (26; 28; 32) zur Anlage an der Schließe (21) aufweist,

9. Spannschelle nach Anspruch 8, wobei die Kante (28) an einer Vertiefung (29) ausgebildet ist, deren Abmessung in Bandlängsrichtung der Breite der Schliße (21) entspricht.

10. Spannschelle nach Anspruch 8, wobei die Kante (26) von einem zurückgefalteten Teil (25) des ersten Band-Endabschnitts (22) gebildet ist.

11. Spannschelle nach Anspruch 8, wobei die Kante (32) von einem im ersten Band-Endabschnitt (22) ausgeprägten Vorsprung (30) gebildet ist.

12. Spannschelle nach Anspruch 5, wobei die Sicke (27) mit einem in Richtung des ersten Band-Endabschnitts (22) weisenden Fortsatz (57 versehen ist.

13. Spannschelle nach Anspruch 5, wobei ein in Richtung des ersten Band-Endabschnitts (22) gelegener Teil (58) der Sicke (27 erhöht ist.

14. Spannschelle nach einem der vorhergehenden Ansprüche mit einem Indikator (59) zur Anzeige der Bandspannung.

15. Spannschelle nach einem der vorhergehenden Ansprüche, wobei der erste Band-Endabschnitt (22) verjüngend (54) ausgebildet ist.

16. Spannschelle nach einem der vorhergehenden Ansprüche, wobei der erste Band-Endabschnitt (22) abgeschrägt (53) ist.

17. Spannschelle nach einem der vorhergehenden Ansprüche, wobei die Schließe (21) einen auf ihrer dem Abbindegut zugewandten Seite einen Fortsatz (49) hat.

18. Spannschelle nach einem der vorhergehenden Ansprüche, wobei die Schließe (21) nach innen weisende Einsprünge (48) zur Anlage an den Seitenkanten (37) des Bandes (20) aufweist.

19. Spannschelle nach einem der vorhergehenden Ansprüche, wobei die Schließe (21) so gestaltet ist, dass sie eine Schneidkante für das Abtrennen überschüssiger Länge des zweiten Band-Endabschnitts (23) bildet.

20. Spannschelle nach einem der vorhergehenden Ansprüche, wobei die Schließe (21) einen ausgeklinkten Teil (47) zum Abdecken einer Schnittkante (41) des zweiten Band-Endabschnitts (23) aufweist.

## Claims

1. A clamp having a band (20) und a buckle (21) surrounding the band and being provided on a first band end portion (22), wherein the second end portion (23) of the band which surrounds the object to be fastened and is fed through the buckle (21) radially outside of the first end portion (22), is adapted to be locked with the buckle (21) by deformation,
wherein a lateral surface of the buckle (21) has a window (36) and the locking is adapted to be performed by deforming a side edge (37) of the band (20) within the window (36),
**characterised in that** the first band end portion (22) is kept within the buckle (21) at a spacing from the second band end portion (23) by a bead provided in the first band end portion, or by recesses (48) formed in the lateral inner surfaces of the buckle (21), or by chamfers (52) provided in the side edges of the inner band, to make sure that a plier-type deforming tool will engage the second band end portion (23) only.

2. The clamp of claim 1, wherein the window (36) is configured to form a cutting edge for deforming the band (20).

3. The clamp of claim 1 or 2, wherein two mutually opposite lateral surfaces of the buckle (12) have windows (36) and the locking is adapted to be performed by simultaneously deforming both side edges (37) of the band (20).

4. The clamp of claim 1, wherein die side edges (50) of the first band end portion (22) are chamfered (52) or cut-out at their sides facing the second and portion (23) within the area of the windows (36) provided in the buckle (21).

5. The clamp of claim 1, wherein the first band end portion (22) is provided with a bead (27) to keep a spacing from the second band end portion.

6. The clamp of any preceding claim, wherein the buckle (21) is made of a bent strip of material having ends extending toward each other and being interconnected by mutually engaging cut-outs (45) and projections (46).

7. The clamp of any preceding claim, wherein the buckle (21) has in each window (36) a chamber extension (55) retaining the first band end portion (22) at a respective lateral notch (56).

8. The clamp of any preceding claim, wherein the first band end portion has at least one transverse edge (26; 28; 32) for abutting at the buckle (21).

9. The clamp of claim 8, wherein the edge (28) is formed at a first recess (29) which has a size in the longitudinal direction of the band corresponding to the width of the buckle (21).

10. The clamp of claim 8, wherein the edge (26) is formed by a folded part (25) of the first band end portion (22).

11. The clamp of claim 8, wherein the edge (32) is formed by a projection (30) stamped in the first band end portion (22).

12. The clamp of claim 5, wherein the bead (27) is provided with an extension (57) in the direction of the first band end portion (22).

13. The clamp of claim 5, wherein a part (58) of the bead (27) situated in the direction of the first band end portion (22) is raised.

14. The clamp of any preceding claim having an indicator (59) for indicating the band tension.

15. The clamp of any preceding claim, wherein the first band end portion (22) is tapered (54).

16. The clamp of any preceding claim, wherein the first band end portion (22) is beveled (53).

17. The clamp of any preceding claim, wherein the buckle (21) has an extension (49) at the side facing the object to be fastened.

18. The clamp of any preceding claim, wherein the buckle (21) has inner projections (48) for abutting the side edges (37) of the band (20).

19. The clamp of any preceding claim, wherein the buckle (21) is configured to form a cutting edge for severing excessive length of the second band end portion (23).

20. The clamp of any preceding claim, wherein the buckle (21) has a notched part (47) for covering a cut edge (41) of the second band end portion (23).

## Revendications

1. Collier ayant une bande (20) et une boucle (21) entourant la bande et étant prévue sur une première partie d'extrémité (22) de bande, dans lequel la deuxième partie d'extrémité (23) de la bande qui entoure l'objet à fixer et est alimentée à travers la boucle (21) radialement à l'extérieur de la première partie d'extrémité (22), est adaptée à être verrouillée avec la boucle (21) par déformation,
dans lequel une surface latérale de la boucle (21) a une fenêtre (36) et le verrouillage est adapté à être exécuté en déformant un bord latéral (37) de la bande (20) à l'intérieur de la fenêtre (36),
**caractérisé en ce que** la première partie d'extrémité (22) de bande est maintenue à l'intérieur de la boucle (21) à un espacement par rapport à la deuxième partie d'extrémité (23) de bande par un cordon prévu dans la première partie d'extrémité de bande, ou par des renfoncements (48) formés dans les surfaces intérieures latérales de la boucle (21), ou par des chanfreins (52) prévus dans les bords latéraux de la bande intérieure, pour veiller à ce qu'un outil de déformation de type pince engage uniquement la deuxième partie d'extrémité (23) de bande.

2. Collier selon la revendication 1, dans lequel la fenêtre (36) est configurée pour former un bord de coupe pour déformer la bande (20).

3. Collier selon la revendication 1 ou 2, dans lequel deux surfaces latérales mutuellement opposées de la boucle (21) ont des fenêtres (36) et le verrouillage est adapté à être exécuté en déformant simultanément les deux bords latéraux (37) de la bande (20).

4. Collier selon la revendication 1, dans lequel les bords latéraux (50) de la première partie d'extrémité (22) de bande sont chanfreinés (52) ou découpés au niveau de leurs côtés faisant face à la deuxième partie d'extrémité (23) à l'intérieur de la superficie des fenêtres (36) prévues dans la boucle (21).

5. Collier selon la revendication 1, dans lequel la première partie d'extrémité (22) de bande est prévue avec un cordon (27) pour maintenir un espace par rapport à la deuxième partie d'extrémité de bande.

6. Collier selon une quelconque revendication précédente, dans lequel la boucle (21) est constituée d'une bande pliée de matériau ayant des extrémités s'étendant l'une vers l'autre et étant interconnectées par des découpes (45) et des projections (46) s'engageant mutuellement.

7. Collier selon une quelconque revendication précédente, dans lequel la boucle (21) a dans chaque fenêtre (36) une extension (55) de chambre maintenant la première partie d'extrémité (22) de bande au niveau d'une entaille latérale (56) respective.

8. Collier selon une quelconque revendication précédente, dans lequel la première partie d'extrémité de bande a au moins un bord transversal (26 ; 28 ; 32) pour venir buter au niveau de la boucle (21).

9. Collier selon la revendication 8, dans lequel le bord (28) est formé au niveau d'un premier renfoncement (29) qui a une taille dans le sens longitudinal de la bande correspondant à la largeur de la boucle (21).

10. Collier selon la revendication 8, dans lequel le bord (26) est formé par une partie repliée (25) de la première partie d'extrémité (22) de bande.

11. Collier selon la revendication 8, dans lequel le bord (32) est formé par une projection (30) estampée dans la première partie d'extrémité (22) de bande.

12. Collier selon la revendication 5, dans lequel le cordon (27) est prévu avec une extension (57) dans le sens de la première partie d'extrémité (22) de bande.

13. Collier selon la revendication 5, dans lequel une partie (58) du cordon (27) située dans le sens de la première partie d'extrémité (22) de bande est surélevée.

14. Collier selon une quelconque revendication précédente ayant un indicateur (59) pour indiquer la tension de bande.

15. Collier selon une quelconque revendication précédente, dans lequel la première partie d'extrémité (22) de bande est effilée (54).

16. Collier selon une quelconque revendication précédente, dans lequel la première partie d'extrémité (22) de bande est biseautée (53).

17. Collier selon une quelconque revendication précédente, dans lequel la boucle (21) a une extension (49) au niveau du côté faisant face à l'objet à fixer.

18. Collier selon une quelconque revendication précédente, dans lequel la boucle (21) a des projections intérieures (48) pour buter sur les bords latéraux (37) de la bande (20).

19. Collier selon une quelconque revendication précédente, dans lequel la boucle (21) est configurée pour former un bord de coupe pour couper une longueur en excès de la deuxième partie d'extrémité (23) de bande.

20. Collier selon une quelconque revendication précédente, dans lequel la boucle (21) a une partie entaillée (47) pour recouvrir un bord de coupe (41) de la deuxième partie d'extrémité (23) de bande.
